# EUROPEAN PATENT APPLICATION

(11) **EP 4 654 322 A1**
(43) Date of publication of application: **26.11.2025**
(21) Application number: 25170694.1
(22) Date of filing: 15.04.2025
(51) Int. Cl.: H01M 10/0567, H01M 10/0569

(54) **ELECTROLYTE AND BATTERY HAVING THE ELECTROLYTE**

(30) Priority: 24.05.2024 CN 202410658204
(71) Applicant: AESC Japan Ltd., Yokohama-Shi, Kanagawa 220-0012 (JP)
(72) Inventor: YU, Le, Pudong New Area Shanghai, 201315 (CN); ZHANG, Xiaozhe, Pudong New Area Shanghai, 201315 (CN)
(74) Representative: Becker, Eberhard

(57) **Abstract**

Disclosed are an electrolyte and a battery including the electrolyte, the electrolyte includes a solvent, a lithium salt and an additive. The solvent is constituted by a fluorinated solvent, the fluorinated solvent includes fluorinated ethylene carbonate (FEC), and the additive includes diethyl 2-(thiophene methyl)phosphonate (DTYP). The content of DTYP is 0.01% to 1.2% based on the total mass of the electrolyte. The electrolyte of the present disclosure, on basis of using fluorinated solvent as solvent to provide the battery with good high voltage performance, also through the synergistic effect of FEC and DTYP with specific content, forms SEI and CEI films with excellent thermal stability at the positive and negative electrode interfaces, thus enabling the battery to have both good high-temperature storage performance and high-temperature cycling performance.

## Description

### BACKGROUND

### Field of the Disclosure

The present disclosure belongs to the field of lithium-ion battery technology, and relates to an electrolyte and a battery including the electrolyte.

### Description of Related Art

In recent years, the rapid development of the new energy vehicle market has led to an explosive growth in the market value of power batteries, primarily dominated by secondary alkali metal ion batteries. However, the energy density of commercially available secondary alkali metal ion batteries has approached its theoretical limit. To fundamentally address the range anxiety of electric vehicle buyers and enhance the energy density of current batteries, increasing battery voltage is an intuitive and feasible method. Nevertheless, as battery voltage increases, the oxidative activity of positive electrode materials rises, making their structure prone to degradation. Additionally, electrolytes are susceptible to decomposition at high voltages, particularly under high-temperature conditions. The side reactions of electrolytes and the interfacial side reactions between electrolytes and electrodes intensify, leading to rapid battery swelling, capacity degradation, and deterioration of cycling performance.

Therefore, how to ensure that batteries maintain good high-temperature performance under high-voltage conditions is an urgent technical problem to be solved in this field.

### SUMMARY OF THE DISCLOSURE

The present disclosure provides an electrolyte, which uses fluorinated solvent as the solvent to give it good high voltage resistance performance, and through the synergistic effect of FEC and a specific content of FTYP, forms CEI film and SEI film with excellent thermal stability on the positive electrode interface and negative electrode interface respectively, enabling the battery to combine excellent high-temperature storage performance and high-temperature cycling performance.

The present disclosure also provides a battery, which, due to including the aforementioned electrolyte, may have excellent high-temperature storage performance and high-temperature cycling performance on the basis of possessing high voltage resistance performance.

The present disclosure provides an electrolyte in the first aspect, including solvent, lithium salt and additive, wherein the solvent is composed of fluorinated solvent, the fluorinated solvent includes fluorinated ethylene carbonate (FEC), and the additive includes diethyl 2-(thiophene methyl)phosphonate (DTYP).
The content of DTYP is 0.01% to 1.2% based on the total mass of the electrolyte.

In an optional embodiment, the content of the FEC is 8% to 12% based on the mass of the fluorinated solvent.

In an optional embodiment, the additive further includes tetravinyl silane (TVSI).

In an optional embodiment, the content of TVSI is 0.01% to 1% based on the total mass of the electrolyte.

In a possible embodiment, the mass ratio of the DTYP to the TVSI is (3~30):(1~10).

In an optional embodiment, the fluorinated solvent further includes fluorinated ethyl methyl carbonate (FEMC) and/or 1,1,2,2-tetrafluoroethyl-2,2,3,3-tetrafluoropropyl ether.

In an optional embodiment, the fluorinated solvent includes FEC, FEMC, and 1,1,2,2-tetrafluoroethyl-2,2,3,3-tetrafluoropropyl ether.

In an optional embodiment, the mass ratio of the FEC, FEMC, and 1,1,2,2-tetrafluoroethyl-2,2,3,3-tetrafluoropropyl ether in mixture is 1:4:3.

In an optional embodiment, the content of the lithium salt is 12% to 20% based on the total mass of the electrolyte.

In an optional embodiment, the lithium salt includes lithium hexafluorophosphate.

The content of lithium hexafluorophosphate is 8% to 20% based on the total mass of the electrolyte.

The present disclosure provides a battery in the second aspect, including a positive electrode sheet, a negative electrode sheet, a separator, and an electrolyte, wherein the electrolyte is the electrolyte provided in the first aspect of the present disclosure.

In an optional embodiment, the positive electrode sheet includes positive electrode active materials, the positive electrode active materials include lithium nickel manganese oxide materials with carbon wrap layer, the chemical formula of the lithium nickel manganese oxide materials is LiₐNiₓMn_{y}O₄, wherein, 0.90≤a≤1.10, 0.4≤x≤0.6, 1.4≤y≤1.6.

The embodiments of present disclosure at least have the following advantageous effects:
1) The electrolyte of the present disclosure adopts fluorinated solvent as the solvent, making the electrolyte have a relatively high content of fluorine element, wherein the strong electron-withdrawing ability of fluorine atoms is beneficial for the electrolyte to have higher oxidation stability, thereby significantly improving the high voltage resistance performance of the electrolyte.
2) The electrolyte of the present disclosure uses a specific content of FEC in combination with DTYP to form SEI films and CEI films with excellent thermal stability on the negative electrode side and positive electrode side respectively, thereby improving the high-temperature storage performance and high-temperature cycling performance of the battery.
3) The DTYP used in the electrolyte of the present disclosure may capture free PF₆⁻ ions in the electrolyte through the phosphoric acid ester part in its structure, which may reduce the thermal decomposition activity of the lithium salt, thereby inhibiting side reactions caused by lithium salt decomposition, improving the thermal stability of the electrolyte, avoiding problems of gas generation, capacity loss and direct current resistance increase of the battery at high temperature, and further improving the high-temperature storage performance and high-temperature cycling performance of the battery.

### DESCRIPTION OF EMBODIMENTS

In order to make the purpose, technical solution and advantages of the present disclosure clearer, the technical solution in the embodiments of the present disclosure will be described clearly and completely in combination with the embodiments of the present disclosure below. Clearly, the described embodiments are only part of the embodiments of the present disclosure, not all of the embodiments. Based on the embodiments in the present disclosure, all other embodiments obtained by those skilled in the art without creative labor are within the protection scope of the present disclosure.

The present disclosure provides an electrolyte in the first aspect, including a solvent, a lithium salt and an additive, wherein the solvent is composed of a fluorinated solvent, the fluorinated solvent includes fluorinated ethylene carbonate (FEC), and the additive includes diethyl 2-(thiophene methyl)phosphonate (DTYP).
The content of DTYP is 0.01% to 1.2% based on the total mass of the electrolyte.

The fluorinated solvent may enable the electrolyte to have a relatively high content of fluorine element. The strong electron-withdrawing ability of fluorine atoms may provide the electrolyte with higher oxidation stability, thereby significantly improving the high voltage resistance of the electrolyte. However, the carbon-fluorine bonds in fluorinated solvents are prone to break at high temperature. The fluorine atoms after breaking may react with active hydrogen in the electrolyte to produce hydrofluoric acid, leading to increased acidity of the electrolyte, which may corrode alkaline substances in SEI and CEI, resulting in damage to the positive and negative electrode interfaces and continuous occurrence of side reactions. This may manifest as issues such as the battery being prone to gas generation at high temperature, capacity loss, and increased direct current resistance (DCR).

The present disclosure uses fluorinated solvents including fluoroethylene carbonate (FEC) in combination with diethyl 2-(thiophene methyl)phosphonate (DTYP, with the structure shown in Formula I) additive, wherein FEC is beneficial for reduction at the negative electrode side to form an SEI film to protect the negative electrode interface. The thiophene part in the DTYP molecular structure may be preferentially oxidized at the positive electrode side to form a stable CEI film to protect the electrolyte from further oxidation side reactions. The phosphoric ester part in the molecular structure may capture free PF₆⁻ ions in the electrolyte, which may reduce the thermal decomposition activity of the lithium salt, thereby inhibiting side reactions caused by lithium salt decomposition, improving the thermal stability of the electrolyte, and avoiding problems of gas generation, capacity loss and DCR increase of the battery at high temperature. Through research, it is found that when the DTYP content in the electrolyte is less than 0.01%, it is difficult to form a stable CEI film; when the DTYP content in the electrolyte is >1.2%, it may lead to significant deterioration of the high-temperature cycling performance of the battery.

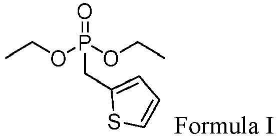

In summary, based on the selection of fluorinated solvent as the solvent to provide the battery with good high voltage resistance performance, the present disclosure further forms SEI and CEI films with excellent thermal stability at the positive and negative electrode interfaces through the synergistic effect of FEC and DTYP with specific content, enabling the battery to combine excellent high-temperature storage performance and high-temperature cycling performance.

In a specific embodiment, based on the total mass of the electrolyte, the content of DTYP may 0.01%, 0.05%, 0.1%, 0.3%, 0.5%, 0.8%, 1.0%, 1.2% or a range composed of any two of these values.

The inventors have discovered that when the content of DTYP is >1%, the high-temperature cycling performance of the battery begins to deteriorate. Therefore, the content of DTYP is further preferably ≤1% based on the total mass of the electrolyte.

The present disclosure does not specifically limit the content of fluorinated solvent in the electrolyte, which may refer to the conventional content of solvent in the electrolyte.

Further, the content of FEC is 8% to 12% based on the mass of the fluorinated solvent. Within this content range, it is conducive to making the battery combine better high voltage resistance performance and high-temperature performance.

In a preferred embodiment, the additive further includes tetravinyl silane (TVSI). The structural formula of TVSI is shown in formula II, and its molecular structure contains unsaturated carbon-carbon double bonds, which preferentially undergo oxidative decomposition on the positive electrode side and participate in the formation of the CEI film together with DTYP. Moreover, the formed CEI film is a silicon-rich polymer that is not easily swollen by fluorinated solvents, which is conducive to further enhancing the stability of the CEI film, thereby further improving the high-temperature storage performance and cycling performance of the battery.

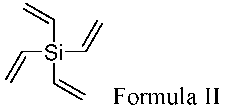

Further, the content of TVSI is 0.01% to 1% based on the total mass of the electrolyte. Exemplarily, based on the total mass of the electrolyte, the content of TVSI is 0.01%, 0.05%, 0.1%, 0.3%, 0.5%, 0.8%, 1.0%, or a range composed of any two of these values.

When the content of TVSI is less than 0.01%, it may be difficult to synergistically form a more stable CEI film with DTYP. However, when the addition amount of TVSI is excessive and greater than 1%, it is likely to lead to an excessively thick CEI film, resulting in an increase in DCR of the battery, which in turn will cause deterioration of the storage performance of the battery at high temperature and a reduction in cycle life.

Further, the mass ratio of DTYP to TVSI is (3~30):(1~10). When DTYP and TVSI are mixed and used within the above mass ratio range, the battery may have better high-temperature cycling performance and high-temperature storage performance.

In a preferred embodiment, the fluorinated solvent furthers includes fluorinated ethyl methyl carbonate (FEMC) and/or 1,1,2,2-tetrafluoroethyl-2,2,3,3-tetrafluoropropyl ether (D2). FEMC may enter the solvation layer of lithium ions, thereby participating in SEI or CEI film formation, introducing F-containing ingredients at the interface between the electrode and the electrolyte, enhancing the stability of the interface, and thus improving the oxidation stability of the electrolyte on the positive electrode side. In addition, since FEMC itself is a fluorinated solvent and is not easily decomposed at high voltage, it may also improve the oxidation stability of the electrolyte itself. D2 is beneficial for reducing the viscosity of the electrolyte, improving the fluidity and conductivity of the electrolyte.

Through research, it has been found that when FEC, FEMC, and D2 are used in combination, compared to the mixed use of FEC with FEMC or FEC with D2, the high-temperature storage performance and high-temperature cycling performance of the battery are improved more.

Further, the mass ratio of FEC, FEMC, and D2 in mixture is 1:4:3. With this mass ratio, the high-temperature storage performance and high-temperature cycling performance of the battery may be further improved.

The present disclosure does not specifically limit the types of lithium salts, which may be selected from conventional lithium salts used in this field, including but not limited to one or more of lithium hexafluorophosphate, lithium tetrafluoroborate, and lithium hexafluoroarsenate. Furthermore, the content of lithium salt is 12% to 20% based on the total mass of the electrolyte. For example, based on the total mass of the electrolyte, the content of lithium salt is 12%, 14%, 16%, 18%, 20%, or any range composed of any two of these values.

In a preferred embodiment, the lithium salt includes lithium hexafluorophosphate, and the content of lithium hexafluorophosphate is 8% to 20% based on the total mass of the electrolyte. For example, based on the total mass of the electrolyte, the content of lithium hexafluorophosphate is 8%, 10%, 12%, 14%, 16%, 18%, 20% or any range composed of any two of these values. Compared with other types of lithium salts, lithium hexafluorophosphate is less likely to exhibit corrosion phenomena at high voltage.

The present disclosure provides a battery in the second aspect, including a positive electrode sheet, a negative electrode sheet, a separator, and an electrolyte, wherein the electrolyte is the electrolyte provided in the first aspect of the present disclosure.

The battery of the present disclosure, due to including the aforementioned electrolyte, may combine excellent high-temperature cycling performance and high-temperature storage performance while being resistant to high voltage.

The positive electrode sheet of the present disclosure includes a current collector and a positive electrode active substance layer disposed on the surface of the current collector, wherein the positive electrode active substance layer is mainly composed of positive electrode active materials, and also includes conventional ingredients such as adhesives and conductive agents.

The present disclosure does not specifically limit the types of positive electrode active materials, which may be selected from conventional positive electrode active materials used in this field, including but not limited to one or more of lithium cobalt oxide, lithium nickel oxide, lithium manganese oxide, lithium nickel cobalt manganese oxide, lithium nickel cobalt aluminum oxide, lithium nickel manganese oxide, and lithium iron phosphate.

In a preferred embodiment, the positive electrode active materials include lithium nickel manganese oxide material with a carbon wrap layer, and the chemical formula of the lithium nickel manganese oxide material is LiₐNiₓMn_{y}O₄, wherein, 0.90≤a≤1.10, 0.4≤x≤0.6, 1.4≤y≤1.6.

The present disclosure does not limit the wrapping form of the carbon wrap layer on the surface of the lithium nickel manganese oxide core, the carbon wrap layer may wrap part of the core surface, or may form a fully wrapped state on the surface thereof.

It may be understood that if the mass ratio of the carbon wrap layer in the lithium nickel manganese oxide material is too low, it is difficult to form effective protection for the inner core, and if the mass ratio is too high, it is unfavorable for the energy density of the battery. In a preferred embodiment, the mass of the carbon wrap layer accounts for 1% to 3% of the mass of the lithium nickel manganese oxide material. Here, the mass of the lithium nickel manganese oxide material refers to the mass of the inner core, not including the mass of the carbon wrap layer.

In a specific embodiment, the carbon source of the carbon wrap layer includes one or more of fructose, polyethylene glycol, galactose, polyvinylpyrrolidone, and tannic acid. The carbon wrap layer formed by the above carbon sources may effectively protect the inner core surface while forming a large number of conductive carbon dots on the inner core surface, which is conducive to improving the conductive performance of the material.

The present disclosure does not particularly limit the conductive agent in the positive electrode sheet, which may be selected from conventional conductive agents commonly used in this field, including but not limited to one or more of acetylene black, conductive carbon black, Ketjen black, conductive graphite, carbon nanotubes, conductive carbon fibers, and graphene.

The present disclosure does not specifically limit the adhesive in the positive electrode sheet. The adhesive may be selected from conventional adhesives commonly used in this field, including but not limited to one or more of polyvinylidene fluoride, polytetrafluoroethylene, sodium carboxymethyl cellulose, styrene-butadiene rubber adhesive, and polyethylene oxide.

The present disclosure does not impose special limitations on the current collector in the positive electrode sheet. The current collector may be selected from conventional positive electrode current collectors commonly used in this field, such as aluminum foil.

The positive electrode sheet of the present disclosure may be prepared by conventional methods in the field. For example, the positive electrode active material, conductive agent, and adhesive are dispersed in a solvent to obtain a slurry for a positive electrode active substance layer. Then, the slurry is coated on the positive electrode current collector and dried to obtain the positive electrode sheet.

In the present disclosure, the negative electrode sheet may be selected from conventional negative electrode sheets commonly used in the field, wherein the negative electrode sheet includes a current collector and a negative electrode active substance layer disposed on the surface of the current collector.

The negative electrode current collector may be selected from conventional negative electrode current collectors used in this field, such as copper foil.

The negative electrode active substance layer mainly consists of negative electrode active materials, and further includes conventional ingredients such as adhesives, thickeners, and conductive agents.

The present disclosure does not particularly limit the types of negative electrode active materials, which may be selected from conventional negative electrode active materials commonly used in this field, including but not limited to one or more of artificial graphite, natural graphite, hard carbon, soft carbon, nano silicon (Si), silicon oxide negative electrode materials (SiOₓ(0<x<2)), and silicon-carbon negative electrode materials.

The present disclosure does not specifically limit the types of conductive agents and adhesives in the negative electrode sheet. The selection range may refer to the types of conductive agents and adhesives in the positive electrode sheet, which will not be repeated here.

The present disclosure does not particularly limit the type of thickener in the negative electrode sheet, which may be selected from conventional thickeners used in this field, including but not limited to one or more of sodium carboxymethyl cellulose, sodium polyacrylate, or polyvinyl alcohol.

The negative electrode sheet of the present disclosure may be prepared by conventional methods in the field. For example, the negative electrode active materials, conductive agent, thickener and adhesive are dispersed in a solvent to form a negative electrode active slurry; then the negative electrode active slurry is coated on a negative electrode current collector and dried to obtain the negative electrode sheet.

The function of the separator is to separate the positive and negative electrode sheets and provide a channel for lithium ion migration. The present disclosure does not specifically limit the type of separator, which may be selected from conventional separators used in the field, such as polypropylene separator, polyethylene separator, etc.

The present disclosure does not specifically limit the preparation method of the lithium-ion battery, and may adopt conventional preparation methods in the field to prepare the lithium-ion battery. For example, the positive electrode sheet, separator and negative electrode sheet are stacked in sequence, with the separator positioned between the positive electrode sheet and the negative electrode sheet to obtain the battery cell through stacking or winding process, and then the lithium-ion battery of the present disclosure may be obtained through processes such as baking, liquid injection, formation, and packaging.

The following will further explain in detail the electrolyte and battery provided by the present disclosure through specific embodiments.

Unless otherwise specified, the reagents, materials, and instruments used in the following examples are conventional reagents, conventional materials, and conventional instruments in this field, all of which may be obtained commercially. The reagents involved may also be synthesized through conventional methods in this field.

In Examples 1 to 14 and Comparative Examples 1 to 10, the lithium-ion batteries are all prepared according to the following method.

### 1. Preparation of the electrolyte:

In an argon glove box with a water content of <10ppm, the lithium salt and additive are added to the solvent and mixed uniformly to obtain the electrolyte.

Specifically, the lithium salt is LiPF₆, and mass of addition thereof is 13% of the total mass of the electrolyte. The specific types and contents of solvents and additives used in the electrolyte are listed in Table 1.

In Table 1, the content of the additive is the mass percentage based on the total mass of the electrolyte.

The mass percentage content of the solvent in the electrolyte is 100% - the mass percentage content of the lithium salt - the mass percentage content of the additive, which is not listed in Table 1.

### 2. Preparation of the positive electrode sheet:

The positive electrode active material Li_{0.98}Ni_{0.45}Mn_{1.55}O₄ with a carbon-wrapped structure, the polyvinylidene fluoride adhesive, and the Super-P conductive agent are mixed according to a weight ratio of 98:1:1. N-methyl pyrrolidone is added, and the mixture is stirred under the action of a vacuum mixer until the system presents a uniform and transparent state, obtaining a positive electrode slurry. The positive electrode slurry is uniformly coated on aluminum foil. The aluminum foil is air-dried at room temperature and then transferred to an oven for drying. Subsequently, the positive electrode sheet is obtained through cold pressing and cutting.

### 3. Preparation of the negative electrode sheet:

The artificial graphite used as negative electrode active material, Super P used as the conductive agent, sodium carboxymethyl cellulose CMC-Na used as thickener, and styrene-butadiene rubber SBR used as adhesive are mixed according to a mass ratio of 96:1:1:2, deionized water is added, and the negative electrode slurry is obtained under the action of a vacuum mixer. The negative electrode slurry is uniformly coated on the negative electrode current collector copper foil, the copper foil is air-dried at room temperature and then transferred to an oven for drying, and then the negative electrode sheet is obtained through cold pressing and cutting.

### 4. Assembly of the lithium-ion battery:

A polypropylene film with a thickness of 12µm is used as a separator. The positive electrode sheet, separator, and negative electrode sheet prepared as described above are stacked in sequence, with the separator positioned between the positive and negative electrode sheets to act as a separator, to obtain a stacked core. The stacked core is then be placed in an aluminum-plastic film packaging bag and transferred to a vacuum oven for drying at 120°C. After injecting 3g of the prepared electrolyte as described above, the bag is sealed, and the electrolyte formation is conducted. Finally, a pouch lithium-ion battery with a capacity of 1Ah is obtained.

**Table 1**

| Group | Solvent | Additive |
|---|---|---|
| Example 1 | FEMC+FEC+D2 (mass ratio of 4:1:3) | 0.01%DTYP |
| Example 2 | FEMC+FEC+D2 (mass ratio of 4:1:3) | 0.3%DTYP |
| Example 3 | FEMC+FEC+D2 (mass ratio of 4:1:3) | 1%DTYP |
| Example 4 | FEMC+FEC+D2 (mass ratio of 4:1:3) | 1.2%DTYP |
| Example 5 | FEMC+FEC+D2 (mass ratio of 4:1:3) | 0.3%DTYP+0.01%TVSI |
| Example 6 | FEMC+FEC+D2 (mass ratio of 4:1:3) | 0.3%DTYP+0.5%TVSI |
| Example 7 | FEMC+FEC+D2 (mass ratio of 4:1:3) | 0.3% DTYP +1%TVSI |
| Example 8 | FEMC+FEC (mass ratio of 6:2) | 0.3% DTYP +0.5%TVSI |
| Example 9 | FEMC+FEC (mass ratio of 2:6) | 0.3% DTYP +0.5%TVSI |
| Example 10 | FEC+D2 (mass ratio of 2:6) | 0.3% DTYP +0.5%TVSI |
| Example 11 | FEC | 0.3% DTYP +0.5%TVSI |
| Example 12 | FEC+FPC (mass ratio of 2:6) | 0.3% DTYP +0.5%TVSI |
| Example 13 | FEMC+FEC+D2 (mass ratio of 4:1:3) | 0.3% DTYP +0.008%TVSI |
| Example 14 | FEMC+FEC+D2 (mass ratio of 4:1:3) | 0.3% DTYP +1.2%TVSI |
| Comparative Example 1 | FEMC+FEC+D2 (mass ratio of 4:1:3) | 0.5%VC |
| Comparative Example 2 | FEMC+FEC+D2 (mass ratio of 4:1:3) | 0.5%VC+0.5%DTD |
| Comparative Example 3 | FEMC+FEC+D2 (mass ratio of 4:1:3) | 0.3% DTD +0.5%TVSI |
| Comparative Example 4 | D2 | 0.3% DTYP +0.5%TVSI |
| Comparative Example 5 | FEMC | 0.3% DTYP +0.5%TVSI |
| Comparative Example 6 | DMC+EC (mass ratio of 5:3) | 0.3% DTYP +0.5%TVSI |
| Comparative Example 7 | FEMC+FEC+D2 (mass ratio of 4:1:3) | 0.008%DTYP |
| Comparative Example 8 | FEMC+FEC+D2 (mass ratio of 4:1:3) | 1.5%DTYP |
| Comparative Example 9 | FEC+DMC (mass ratio of 2:6) | 0.3% DTYP +0.5%TVSI |
| Comparative Example 10 | FEC+EC (mass ratio of 2:6) | 0.3% DTYP +0.5%TVSI |

In Table 1, DMC represents dimethyl carbonate, FPC represents fluoroethylene carbonate, EC represents ethylene carbonate, VC represents vinylene carbonate, and DTD represents ethylene sulfate.

### Test Example

The lithium-ion batteries of the above examples and comparative examples are tested for the following performance:

### (1) Direct current resistance (DCR) test for lithium-ion battery under 25°C

The battery is placed in a constant temperature chamber, and the temperature in the constant temperature chamber is adjusted to 25°C. The battery is subjected to three charge-discharge cycles using a 0.33C current, and the discharge capacity of the last cycle is marked as C0. At the specified temperature (25°C), when the battery is discharged to 50% SOC (State of Charge, reflecting the remaining capacity of the battery) with a 1C0 current, the current is increased to 4C0 and maintained for 30s. The difference between the updated stable voltage and the original platform voltage is detected, and the ratio of this value to the 4C0 current value is the direct current resistance (DCR) of the battery. The DCR test result after the first full charge of the battery is the initial DCR of the battery.

### (2) Capacity retention ratio of lithium-ion battery under high-temperature storage (60°C)

At room temperature, the battery is discharged at a 0.3C rate to the cut-off voltage, and the discharged capacity may be marked as the initial discharge capacity C0. Then, the battery is fully charged and stored in a constant temperature chamber at 60°C for 15 days. After storage, the battery is taken out and cooled to room temperature. The battery is then discharged at a 0.3C rate to the cut-off voltage, with the discharge capacity marked as C1. The capacity retention rate of the battery at high-temperature storage under 60°C is C1/C0×100%.

### (3) Cycle test under high temperature of 45°C

At a 45°C environment, the battery is subjected to cycle charging and discharging, where the voltage range for charging and discharging is 3.4V to 4.85V, the charging and discharging rate is 1C/1C, and the discharge capacity of each cycle is recorded. When the battery capacity remains at 80% SOC (State of Charge), the test is terminated, and the actual number of cycles achieved is recorded.

### The above test results are shown in Table 2.

**Table 2**

| Group | DCR (mΩ) at 25°C | Storage capacity retention rate (%) at high temperature of 60°C | Cycle number (80% SOH) at high temperature of 45°C |
|---|---|---|---|
| Example 1 | 113 | 70 | 352 |
| Example 2 | 103 | 75 | 392 |
| Example 3 | 113 | 79 | 378 |
| Example 4 | 123 | 84 | 343 |
| Example 5 | 100 | 87 | 426 |
| Example 6 | 66 | 98 | 438 |
| Example 7 | 95 | 91 | 438 |
| Example 8 | 138 | 68 | 305 |
| Example 9 | 159 | 67 | 290 |
| Example 10 | 173 | 62 | 254 |
| Example 11 | 209 | 31 | 154 |
| Example 12 | 188 | 54 | 212 |
| Example 13 | 102 | 79 | 318 |
| Example 14 | 179 | 85 | 362 |
| Comparative Example 1 | 199 | 65 | 108 |
| Comparative Example 2 | 275 | 77 | 90 |
| Comparative Example 3 | 307 | 69 | 54 |
| Comparative Example 4 | Dead | Dead | Dead |
| Comparative Example 5 | 331 | 81 | 76 |
| Comparative Example 6 | Dead | Dead | Dead |
| Comparative Example 7 | 101 | 62 | 319 |
| Comparative Example 8 | 159 | 81 | 299 |
| Comparative Example 9 | 498 | 12 | 86 |
| Comparative Example 10 | 518 | 29 | 99 |

In Table 2, "Dead" indicates that the battery is not able to be discharged normally.

From the data in Table 2, the following conclusions may be arrived at through analysis:
1) Through comparison of Examples 1 to 4 and Comparative Examples 7 and 8, it may be known that when the content of DTYP in the electrolyte is within the range of 0.01% to 1.2%, the battery has a relatively low DCR value at 25°C and a relatively high-temperature storage capacity retention rate at 60°C. When the content of DTYP is 0.3%, the comprehensive performance of the battery is optimal. When the content of DTYP in the electrolyte rises from 0.01% to 0.3%, the storage capacity recovery rate of the battery at 60°C increases, indicating that under high-temperature conditions, the DTYP additive may better maintain thermodynamic stability and reduce reactions at the solid-liquid interface. However, when the content of DTYP in the electrolyte reaches 1% or above, the number of cycles of the battery at a high temperature of 45°C deteriorates to some extent. When the content of DTYP in the electrolyte is less than 0.01% or greater than 1.2%, the number of cycles of the battery at a high temperature of 45°C significantly decreases, and when the content of DTYP is greater than 1.2%, the DCR resistance of the battery at 25°C also significantly increases.
2) Through comparison of Example 2, Examples 5 to 7, and Examples 13 to 14, it may be known that when the solvent system remains unchanged, DTYP and TVSI are adopted in combination, and the content of TVSI in the electrolyte is controlled to be 0.01% to 1%, the DCR of the corresponding battery at 25°C is reduced, and the storage capacity retention rate at 60°C and the number of cycles at high temperature of 45°C are improved to some extent. However, when the content of TVSI in the electrolyte is lower than 0.01%, the DCR at 25°C and high-temperature storage performance of the battery are comparable to those of Example 2 without adding TVSI, and the number of cycles of the battery at high temperature deteriorates. When the content of TVSI in the electrolyte is higher than 1%, the storage capacity retention rate of the battery at 60°C is improved compared to Example 2, but the DCR of the battery at 25°C increases significantly, and the number of cycles at high temperature of 45°C also decreases.
3) By comparing Example 6 and Examples 8 to 12, it may be known that compared to using only FEC as the solvent, or using a mixture of FEC with FPC, D2 or FEMC as the solvent, when using a mixture of FEC, FEMC, and D2 as the solvent, the battery has the lowest DCR at 25°C, the highest storage capacity retention rate at 60°C and the highest number of cycles at high temperature of 45°C, and the overall performance of the battery is improved more in various aspects.
4) From the comparison of Examples 1 to 3, it may be seen that when DTYP is not added to the electrolyte, and only conventional electrolyte additives such as VC and DTD are used, the various performance characteristics of the battery are significantly deteriorated. Or, when DTD and TVSI are used in combination, the battery fails to maintain a balance between kinetics and thermodynamics, with the DCR of the battery significantly increasing and the number of cycles at high temperature of 45°C markedly decreasing.
5) From the comparison of Examples 4 to 5, it may be seen that when only D2 is used as the solvent in the electrolyte, the battery is not able to be charged and discharged normally. The reason is that D2 has a high viscosity and low solubility for lithium salts, making the battery unable to function as an electrolyte for normal battery operation. When only FEMC is used as the solvent in the electrolyte, the battery exhibits an extremely high DCR value at 25°C, and the cycling performance at high temperature of 45°C is significantly poor.
6) From Comparative Examples 6, 9, and 10, it may be seen that when only conventional carbonate ester solvents are used, the carbonate ester solvents can hardly withstand the high voltage of the battery system, resulting in a large amount of electrolyte oxidation during the formation stage, which leads to the inability of the battery to cycle normally. When FEC is used in combination with conventional carbonate ester solvents such as DMC or EC, the electrolyte can also hardly withstand high voltage, and the battery exhibits extremely high initial impedance, with very poor storage performance at 60°C and cycling performance at high temperature of 45°C.

## Claims

1. An electrolyte, comprising a solvent, a lithium salt and an additive, wherein the solvent is composed of a fluorinated solvent, the fluorinated solvent comprises fluorinated ethylene carbonate, and the additive comprises diethyl 2-(thiophene methyl)phosphonate);
a content of the DTYP is 0.01% to 1.2% based on a total mass of the electrolyte.

2. The electrolyte according to claim 1, wherein a content of the fluorinated ethylene carbonate is 8% to 12% based on a mass of the fluorinated solvent.

3. The electrolyte according to claim 1, wherein the additive further comprises tetravinyl silane.

4. The electrolyte according to claim 3, wherein a content of the tetravinyl silane is 0.01% to 1% based on the total mass of the electrolyte.

5. The electrolyte according to claim 4, wherein a mass ratio of the diethyl 2-(thiophene methyl)phosphonate to the tetravinyl silane is (3~30):(1~10).

6. The electrolyte according to claim 1, wherein the fluorinated solvent further comprises fluorinated ethyl methyl carbonate and/or 1,1,2,2-tetrafluoroethyl-2,2,3,3-tetrafluoropropyl ether.

7. The electrolyte according to claim 6, wherein the fluorinated solvent comprises fluorinated ethylene carbonate, fluorinated ethyl methyl carbonate, and 1,1,2,2-tetrafluoroethyl-2,2,3,3-tetrafluoropropyl ether.

8. The electrolyte according to claim 7, wherein a mass ratio of the fluorinated ethylene carbonate, the fluorinated ethyl methyl carbonate, and the 1,1,2,2-tetrafluoroethyl-2,2,3,3-tetrafluoropropyl ether in mixture is 1:4:3.

9. The electrolyte according to claim 1, wherein a content of the lithium salt is 12% to 20% based on the total mass of the electrolyte.

10. The electrolyte according to claim 9, wherein the lithium salt comprises lithium hexafluorophosphate;
a content of the lithium hexafluorophosphate is 8% to 20% based on the total mass of the electrolyte.

11. A battery, comprising a positive electrode sheet, a negative electrode sheet, a separator, and an electrolyte, wherein the electrolyte is the electrolyte according to claim 1.

12. The battery according to claim 11, wherein the positive electrode sheet comprises positive electrode active materials, the positive electrode active materials comprise lithium nickel manganese oxide materials with a carbon wrap layer, a chemical formula of the lithium nickel manganese oxide materials is LiₐNiₓMn_{y}O₄, wherein, 0.90≤a≤1.10, 0.4≤x≤0.6, 1.4≤y≤1.6.
